# EUROPÄISCHE PATENTSCHRIFT

(11) **EP 1 332 186 B1**
(45) Veröffentlichungstag und Bekanntmachung des Hinweises auf die Patenterteilung: **27.12.2006**
(21) Anmeldenummer: 01993655.8
(22) Anmeldetag: 08.11.2001
(51) Int. Cl.: C09D 5/02

(54) **STRUKTURVISKOSE, VON ORGANISCHEN LÖSEMITTELN UND EXTERNEN EMULGATOREN FREIE PULVERKLARLACK-SLURRY, VERFAHREN ZU IHRER HERSTELLUNG UND IHRE VERWENDUNG**
STRUCTURALLY VISCOUS POWDER CLEARCOAT SLURRY FREE FROM ORGANIC SOLVENTS AND EXTERNAL EMULSIFIERS, METHOD FOR PRODUCING THE SAME AND THE USE THEREOF
SUSPENSION DE VERNIS CLAIR EN POUDRE, A VISCOSITE DE STRUCTURE, EXEMPTE DE SOLVANTS ORGANIQUES ET D'EMULSIONNANTS EXTERNES, SON PROCEDE DE FABRICATION ET SON UTILISATION

(30) Priorität: 09.11.2000 DE 10055464
(43) Veröffentlichungstag der Anmeldung: 06.08.2003
(73) Patentinhaber: BASF Coatings AG, 48165 Münster (DE)
(72) Erfinder: WOLTERING, Joachim, 48159 Münster (DE); OTT, Günther, 48167 Münster (DE); RAKA, Fatmir, 48143 Münster (DE); FLORACK, Heike, 48565 Steinfurt (DE)
(86) Internationale Anmeldenummer: PCT/EP2001/012925
(87) Internationale Veröffentlichungsnummer: WO 2002/038685

(56) Entgegenhaltungen:
- WO-A-00/15721

## Beschreibung

Die vorliegende Erfindung betrifft eine neue von organischen Lösemitteln und externen Emulgatoren freie Pulverldarlack-Slurry, welche eine Strukturviskosität aufweist. Nicht zuletzt betrifft die Erfindung die Verwendung der neuen Pulverklarlack-Slurry für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile.

Aus dem deutschen Patent DE 198 41 842 C 2 ist eine Pulverklarlack-Slurry bekannt, die von organischen Lösemitteln und externen Emulgatoren frei ist und feste sphärische Partikel einer mittleren Teilchengröße von 0,8 bis 20 µm und einer maximalen Teilchengröße von 30 µm enthält, wobei die Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von
(i) 50 bis 1000 mPas bei einer Scherrate von 1.000 s⁻¹,
(ii) 150 bis 8.000 mPas·bei einer Scherrate von 10 s⁻¹ und
(iii) 180 bis 12.000 mPas bei einer Scherrate von 1 s⁻¹
aufweist. Als Bindemittel wird ein Methacrylatcopolymerisat verwendet, das eine OH-Zahl von 110 mg KOH/g hat (vgl. das Herstellbeispiel 1 auf Seite 6, Zeilen 30 bis 47, des Patents). Die mit Hilfe dieses Bindemittels hergestellte Pulverklarlack-Slurry des Beispiels 1 des Patents (vgl. Seite 7, Zeilen 31 bis 54, des Patents) weist einen Gehalt an Carboxylgruppen von 0,52 meq/g Festkörper und einen Gehalt an Carboxylatgruppen von 0,22 meq/g Festkörper auf, woraus sich ein Neutralisationsgrad von 42% errechnet. Die Partikelgröße liegt bei 6 µm. Die mit Hilfe des Bindemittels hergestellte Pulverklarlack-Slurry des Beispiels 2 des Patents (vgl. Seite 7, Zeile 56, bis Seite 8, Zeile 22, des Patents) weist einen Gehalt von Carboxylgruppen von 0,19 meq/g Festkörper und einen Gehalt an Carboxylatgruppen von 0,10 meq/g Festkörper auf, woraus sich ein Neutralisationsgrad von 52% ergibt.

Die bekannte Pulverklarlack-Slurry wird durch
1) Emulgieren einer organischen Lösung, enthaltend Bindemittel und Vernetzer, wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Pulverklarlack-Slurry mit festen sphärischen Partikeln resultiert,
   hergestellt, wobei der Pulverklarlack-Slurry
4) noch mindestens ein ionischer, insbesondere anionischer, Verdicker und mindestens ein nicht ionischer Assoziativ-Verdicker zugesetzt wird.

Diese Pulverklarlack-Slurry ist mit einer geringen Anzahl an Verarbeitungsschritten herstellbar; dabei weist sie aufgrund ihrer typischen Pulverslurryeigenschaften mit Restlösemittelgehalten von < 1% und ihren Partikelgrößen ein vorteilhaftes Applikationsverhalten auf. Bei den geforderten Filinschichtdicken von ca. 40 - 50 µm treten im allgemeinen auch ohne Zuhilfenahme von organischen Lösemitteln keine Kocher auf. Außerdem sind ihre Partikel wegen Vermischung ihrer Bestandteile in Lösung sehr homogen.

Die hieraus hergestellten Klarlackierungen zeigen jedoch ein Weißanlaufen, wenn sie mit Feuchtigkeit belastet werden. Außerdem erreichen sie nicht die geforderte Chemikalienbeständigkeit von aus üblichen und bekannten, marktgängigen Zweikomponentenklarlacken hergestellten Klarlackierungen.

Bei dem Versuch, diese Nachteile durch die Erhöhung der Vernetzungsdichte der Klarlackierungen zu beheben, treten jedoch neue Probleme auf. So trocknen die entsprechenden Pulverklarlack-Slurries nicht mehr pulverförmig auf und weisen nach der Härtung bei höheren Schichtdicken Lackstörungen in der Form von Kochern und Spannungsrissen auf.

Aufgabe der vorliegenden Erfindung ist es, eine neue Pulverklarlack-Slurry zur Verfügung zu stellen, welche die Nachteile des Standes der Technik nicht mehr länger aufweist, sondern die unter Wahrung aller Vorteile der bekannten Pulverklarlack-Slurry nach der Applikation auch in hohen Schichtdicken pulverförmig auftrocknet und Klarlackierungen liefert, die bei Belastung mit Feuchtigkeit nicht weiß anlaufen, auch oberhalb einer Trockenschichtdicke von 50 µm auch ohne Zuhilfenahme von organischen Lösemitteln keine Lackstörungen wie Kocher und Spannungsrisse ("mudcracking") zeigen und eine Chemikalienstabilität wie die aus den marktgängigen Zweikomponentenklarlacken hergestellten Klarlackierungen aufweisen.

Demgemäß wurde die neue strukturviskose, von organischen Lösemitteln und externen Emulgatoren freie Pulverklarlack-Slurry gefunden, enthaltend feste und/oder hochviskose, unter Lagerungs- und Anwendungsbedingungen dimensionsstabile Partikel, wobei
1. die Partikel
   1.1 eine mittleren Teilchengröße von 1,0 bis 20 µm aufweisen, wobei mindestens 99% der Partikel eine Teilchengröße ≤30 µm haben, und
   1.2 mindestens ein Polyol einer OH-Zahl von 120 bis 180 mg KOH/g, enthaltend potentiell ionische Gruppen, als Bindemittel enthalten,
   und wobei
2. die Pulverklarlack-Sluny
   2.1 einen Gehalt an potentiell ionischen Gruppen von 0,01 bis 1 meq/g Festkörper,
   2.2 bei einem Neutralisationsgrad von höchstens 50% einen Gehalt an durch Neutralisation der potentiell ionischen Gruppen erzeugten ionischen Gruppen von 0,005 bis 0,1 meq/g Festkörper und
   2.3 eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹
aufweist.

Im folgenden wird die neue, strukturviskose, von organischen Lösemitteln und externen Emulgatoren freie Pulverklarlack-Slurry der Kürze halber als "erfindungsgemäße Slurry" bezeichnet.

Im Hinblick auf den Stand der Technik war es für den Fachmann überraschend und nicht vorhersehbar, daß die der vorliegenden Erfindung zugrundeliegende Aufgabe dadurch gelöst werden konnte, daß zum einen das Bindemittel der bekannten Pulverklartack-Slurry durch ein Bindemittel ersetzt wurde, das eine höhere OH-Zahl aufwies, und daß zum anderen die hieraus resultierenden Nachteile durch eine Verringerung der ionischen Gruppen in den Bindemitteln überkompensiert werden konnten, sodaß insgesamt ein Eigenschaftsprofil resultierte, daß das der bekannten Pulverklarlack-Slurry übertraf.

Für die erfindungsgemäße Slurry ist es wesentlich, daß die mittlere Teilchengröße , der festen Partikel bei 1 bis 20 µm und besonders bevorzugt bei 3 bis 15 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert. Dabei haben mindestens 99% der Partikel eine Teilchengröße <30 µm.

Slurries mit derartigen mittleren Teilchengrößen und einem Lösemittelgehalt von < 1% weisen ein besseres Applikationsverhalten auf und zeigen bei den applizierten Schichtdicken von > 30 µm, wie sie derzeitig in der Automobilindustrie bei der Endlackierung von Automobilen praktiziert werden, eine deutlich geringere Neigung zu Kochern und zum "mudcracking" als herkömmliche Pulverklarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen der hochempfindlichen Applikationsapparaturen zu rechnen ist.

Die erfindungsgemäße Slurry ist frei von organischen Lösemitteln. Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

In gleicher Weise ist im Rahmen der vorliegenden Erfindung die Angabe "frei von externen Emulgatoren" zu verstehen.

Die vorstehend beschriebenen erfindungsgemäß zu verwendenden Teilchengrößen werden somit auch ohne Zuhilfenahme von zusätzlichen externen Emulgatoren erhalten, wenn die erfindungsgemäße Slurry einen Gehalt an potentiell ionischen Gruppen von 0,05 bis 1, vorzugsweise 0,05 bis 0,9 bevorzugt 0,05 bis 0,8, besonders bevorzugt 0,05 bis 0,7 und insbesondere 0,05 bis 0,6 meq/g Festkörper hat.

Bei einem Neutralisationsgrad von höchstens 50%, vorzugsweise höchstens 48%, hat die erfindungsgemäße Slurry einen Gehalt an durch Neutralisation der potentiell ionischen Gruppen erzeugten ionischen Gruppen von 0,005 bis 0,1, vorzugsweise 0,005 bis 0,099, bevorzugt 0,005 bis 0,098 und insbesondere 0,005 bis 0,097 meq/g.

Die chemische Natur des Bindemittels ist daher in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur inbeschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure, Dimethylolpropionsäure oder Milchsäure verwendet.

Bindemittel, welche Kationen bildende Gruppen enthalten, sind von dem Gebiet der Elektrotauchlacke bekannt. Beispielhaft sei auf die Patentschriften EP 0 012 463 A 1, EP 0 612 818 A 1 oder US 4,071,428 A verwiesen.

Für den bevorzugten Einsatz der erfindungsgemäß Slurry in der Automobildecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Als Bindemittel, welche Anionen bildende Gruppen enthalten, können beliebige Harze mit den vorstehend genannten Säuregruppen verwendet werden. Es ist jedoch wesentlich, daß sie daneben noch Hydroxylgruppen tragen, d. h., daß sie Polyole sind.

Erfindungsgemäß weisen die Polyole eine OH-Zahl von 120 bis 180 und insbesondere 130 bis 160 mg KOH/g auf.

Beispiele für geeignete Bindemittel sind hydroxylgruppenhaltige, statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane.

Neben dem Hydroxylgruppen können die Oligomere und Polymere noch andere funktionelle Gruppen wie Acryloyl-, Ether-, Amid -, Imid -, Thio -, Carbonat- oder Epoxidgruppen enthalten, sofern diese nicht die Vernetzungsreaktionen stören.

Diese Oligomere und Polymere sind dem Fachmann bekannt, und zahlreiche geeignete Verbindungen sind am Markt erhältlich.

Erfindungsgemäß sind die (Meth)Acrylatcopolymerisate, die Polyester, die Alkydharze, die Polyurethane und/oder die acrylierten Polyurethane von Vorteil und werden deshalb bevorzugt verwendet.

Gut geeignete (Meth)Acrylatcopolymerisate und Verfahren zu ihrer Herstellung werden beispielsweise in der europäischen Patentanmeldung EP 0 767 185 A 1, den deutschen Patenten DE 22 14 650 B 1 oder DE 27 49 576 B 1 und den amerikanischen Patenten US 4,091,048 A, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Gut geeignete Polyester und Alkydharze sowie ihre Herstellung werden beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

Gut geeignete Polyurethane und/oder acrylierte Polyurethane sowie ihre Herstellung werden beispielsweise in den Patentschriften EP 0 708 788 A 1, DE 44 01 544 A 1 oder DE-A-195 34 361 A 1 beschrieben.

Die vorstehend beschriebenen Bindemittel können einzelne oder als Gemisch aus mindestens zwei unterschiedlichen Bindemitteln eingesetzt werden. Erfindungsgemäß bieten die (Meth)Acrylatcopolymerisate besondere Vorteile und werden deshalb besonders bevorzugt angewandt.

Der Gehalt der erfindungsgemäßen Slurry an den vorstehend beschriebenen Bindemitteln kann breit variieren. Vorzugsweise liegt er bei 5 bis 80, bevorzugt 6 bis 75, besonders bevorzugt 7 bis 70, ganz besonders bevorzugt 8 bis 65 und insbesondere 9 bis 60 Gew.-%, jeweils bezogen auf den Festkörper der erfindungsgemäßen Pulverslurry.

Als Vernetzungsmittel sind alle auf dem Gebiet der lichtstabilen Klarlackierungen gebräuchlichen Vernetzungsmittel geeignet. Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere 1,12-Dodecandicarbonsäure,
- Epoxidgruppen enthaltende Verbindungen oder Harze, wie sie beispielsweise in den Patentschriften EP 0 299 420 A1, DE 22 14 650 B 1, DE 27 49 576 B 1, US 4,091,048 A oder US 3,781,379 A beschrieben werden,
- Tris(alkoxycarbonylamino)triazine, wie sie in den Patentschriften US 4 939 213 A, US 5 084 541 A, US 5 288 865 A oder der Patentanmeldung EP 0 604 922 A beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, oder
- beta-Hydroxyalkylamide wie N,N,N',N'-Tetrakis(2-hydroxyethyl)adipamid oder N,N,N',N'-Tetrakis(2-hydroxypropyl)adipamid.

Die vorstehend beschriebenen Vernetzungsmittel können einzeln oder als Gemisch aus mindestens zwei Vernetzungsmittels eingesetzt werden. Erfindungsgemäß bieten die blockierten Polyisocyanate und/oder Tris(alkoxycarbonylamino)triazine besondere Vorteile und werden deshalb besonders bevorzugt verwendet.

Der Gehalt der erfindungsgemäßen Slurry an den Vemetzungsmittels kann ebenfalls breit variieren und richtet sich in erster Linie nach der Funktionalität und Menge der Bindemittel einerseits und der Funktionalität der Vernetzungsmittel andererseits. Vorzugsweise liegt er bei 20 bis 95, bevorzugt 25 bis 94, besonders bevorzugt 30 bis 93, ganz besonders bevorzugt 35 bis 92 und insbesondere 40 bis einen 90 Gew.-%, jeweils bezogen auf den Festkörper der erfindungsgemäßen Slurry.

Die erfindungsgemäße Slurry enthält nichtionische und ionische Verdicker. Hierdurch wird der Neigung der vergleichsweise großen festen Partikel zur Sedimentation wirksam begegnet.

Beispiele nichtionischer Verdicker sind Hydroxyethylcellulose und Polyvinylalkohole. Sogenannte nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Düsocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig -neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, bekannt.

Für die erfindungsgemäße Slurry ist es vorteilhaft, wenn beide der vorstehend beschriebenen Verdicker-Typen hierin enthalten sind. Die Menge der zuzusetzenden Verdicker und das Verhältnis von ionischem zu nichtionischem Verdicker richtet sich nach der gewünschten Viskosität der erfindungsgemäß Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Erfindungsgemäß wird ein Viskositätsbereich von 50 bis 1500 mPas bei einer Scherrate von 1000 s und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Slurry gewährleistet ist.

Die festen Partikeln der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind Polymere, Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Der erfindungsgemäßen Slurry können im Film einvernetzbare Verlaufhilfsmittel, Reaktivverdünner oder vernetzende polyolische Komponenten zugesetzt werden.

Wichtig ist jedoch, daß diese Bestandteile sich bevorzugt in der äußeren, wässrigen Phase der erfindungsgemäßen Slurry befinden und nicht in der dispersen organischen Phase, wo sie eine Absenkung der Glasübergangstemperatur Tg und damit eine Koaleszenz oder Koagulation von gegebenenfalls abgesetzten Partikeln bewirken würden. Beispiele geeigneter Bestandteile dieser Art sind thermisch härtbare Reaktivverdünner wie stellungsisomere Diethyloctandiole oder Hydroxylgruppen enthaltende hyperverzweigte Verbindungen oder Dendrimere wie sie in den deutschen Patentanmeldungen DE 198 05 421 A 1, DE 198 09 643 A 1 oder DE 198 40 405 A 1 beschrieben werden.

Darüber hinaus kann die erfindungsgemäße Slurry noch mit aktinischer Strahlung härtbare Bestandteile enthalten, wenn sie sowohl thermisch als auch mit aktinischer Strahlung härtbar sein soll. Unter aktinischer Strahlung wird elektromagnetische Strahlung wie nahes Infrarot, sichtbares Licht, UV-Strahlung oder Röntgenstrahlung, insbesondere UV-Strahlung, oder Korpuskularstrahlung wie Elektronenstrahlen verstanden. Die gemeinsame Anwendung von Hitze und aktinischer Strahlung wird auch als Dual-Cure bezeichnet.

Um eine erfindungsgemäße Dual-Cure-Slurry zu erhalten, können in die vorstehend beschriebenen Bindemitteln beispielsweise über polymeranaloge Reaktionen (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen, eingebaut werden.

Oder es können Bestandteile zugesetzt werden, wie sie üblicherweise in mit aktinischer Strahlung härtbaren Beschichtungsstoffen angewandt werden.

Hierbei handelt es sich beispielsweise um
- die in den den europäischen Patentanmeldungen EP 0 928 800 A1, EP 0 636669A1,EP0410242A1,EP0783 534 A 1, EP 0 650 978 A 1, EP 0650979A1,EP0650985A1,EP0540884A1,EP0568967A1, EP 0 054 505 A 1 oder EP 0 002 866 A 1, den deutschen Patentanmeldungen DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UV-härtbaren Klarlacken und Pulverklarlacken vorgesehenen Bindemittel;
- mit aktinischer Strahlung härtbare Reaktivverdünner, wie die in Römpp Lexikon Lacke und Druckfarben, Georg Thieme Verlag, Stuttgart, New York, 1998, auf Seite 491 unter dem Stichwort »Reaktivverdünner« beschriebenen; oder um
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden.

Die erfindungsgemäße Slurry kann nach den Verfahren hergestellten werden, wie sie in den Patentanmeldungen DE 195 40 977 A 1, DE 195 18 392 A 1, DE 196 17 086 A 1, DE-A-196 13 547, DE 196 18 657 A1, DE 196 52 813 A1, DE 196 17 086 A 1, DE-A-198 14 471 A 1, DE 198 41 408 A 1 oder DE 198 41 842 A 1 oder C 2 beschrieben werden. Erfindungsgemäß ist es von Vorteil, die erfindungsgemäße Slurry mit Hilfe des in der DE 198 41 842 A 1 oder C 2 beschriebenen Verfahrens herzustellen.

Bei diesem Verfahren werden die ionisch stabilisierbaren Bindemittel und die Vernetzungsmittel sowie gegebenenfalls die Additive in organischer Lösung gemischt und zusammen mit Hilfe von Neutralisationmitteln in Wasser nach dem Sekundärdispersionsverfahren dispergiert. Sodann wird mit Wasser unter Rühren verdünnt. Es bildet sich zunächst eine Wasser-in-Öl-Emulsion aus, die bei weiterer Verdünnung in eine Öl-in- Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeoptrope Destillation von Lösemitteln befreit.

Die Destillationstemperatur richtet sich in erster Linie nach der Glasübergangstemperatur Tg des Bindemittels. Um Koagulate, d.h. ein Verfließen der erfindungsgemäß nur geringfügig stabilisierten Partikel zu einer separaten kontinuierlichen organischen Phase während der Destillation zu vermeiden, ist es wesentlich, die Destillationstemperatur unterhalb der Glasübergangstemperatur Tg zu halten. Die Glasübergangstemperatur ist ersatzweise auch über die Mindestfilmbildetemperatur der Dispersion beschreibbar. Die Mindestfilmbildetemperatur kann ermittelt werden, indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet.

Erfindungsgemäß ist es von Vorteil, wenn die Mindestfilmbildetemperatur mehr als 20 °C, insbesondere mehr als 30 °C beträgt. Die Mindestfilmbildetemperatur kann ermittelt werden, indem die wäßrige Dispersion des Bindemittels mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaligen Emulsion (flüssig-in-flüssig-Dispersion) eine fest-in-flüssig-Dispersion, d.h. die erfindungsgemäße Slurry, aus.

Vorzugsweise werden die Partikel der resultierenden Slurry im nassen Zustand mechanisch zerkleinert, was auch als Naßvermahlung bezeichnet wird.

Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die erfindungsgemäße Slurry mit Hilfe geeigneter Vorrichtungen, wie Pumpen, den vorstehend beschriebenen Vorrichtungen zugeführt und im Kreis hierrüber gefahren, bis die gewünschte Teilchengröße erreicht ist.

Die erfindungsgemäße Slurry weist vorteilhafterweise einen Festkörpergehalt von 10 bis 60 Gew.-%, insbesondere von 20 bis 50 Gew.-%, auf.

Vorzugsweise wird die erfindungsgemäße Slurry vor ihrer Verwendung filtriert. Hierfür werden die üblichen und bekannten Filtrationsvornchtungen und Filter verwendet, wie sie auch für die Filtration der bekannten Pulverklarlack-Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, kein Verfilmen. D.h., die als NaBschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste Form verändern. Die pulverförmige feste Film läßt das Restwasser leichter abdampfen als ein verfließender Naßfilm. Dadurch wird die Gefahr von im gehärteten Film eingeschlossenen Blasen von verdampftem Wasser ("Kochern") vermindert. Außerdem ist die Neigung zum "mudcracking" ausgesprochen gering. Überraschend ist hier bei der Befund, daß die erfindungsgemäßen Slurries eine umso geringere Neigung zu "mudcracking" haben, je höher ihre Partikelgrößen sind.

In dem nachfolgenden Einbrennschritt wird die nun weitgehend wasserfreie Pulverschicht geschmolzen und zur Vernetzung gebracht. In manchen Fällen kann es von Vorteil sein, den Verlaufsprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vernetzungstemperatur liegt zwischen 120 und 160°C. Die entsprechende Einbrennzeit liegt zwischen 20 und 60 Minuten.

Im Falle der erfindungsgemäßen Dual-Cure-Slurry wird die thermische Härtung noch durch die Härtung mit aktinischer Strahlung ergänzt, wobei die üblichen und bekannten Strahlenquellen angewandt werden.

Die hierbei resultierende Klarlackierung weist hervorragende anwendungstechnische Eigenschaften auf So haftet sie fest auf allen üblichen und bekannten Basislackschichten oder auf Substraten wie Metall, Glas, Holz, Keramik, Stein, Beton oder Kunststoff. Sie ist von hohem Glanz, glatt, kratzfest, witterungsbeständig, chemikalienstabil und auch in hohem Schichtdicken frei von Störungen wie Spannungsrisse oder Kochern. Bei Belastung mit Feuchtigkeit zeigt sie kein Weißanlaufen mehr.

Wegen dieses vorteilhaften Eigenschaftsprofils ist die erfindungsgemäße Slurry hervorragend für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile, geeignet. Hierbei wird sie vor allem zur Herstellung von Klarlackierungen im Rahmen von farb- und/oder effektgebenden Mehrschichtlackierungen verwendet, die nach den üblichen und bekannten Naß-innaß-Verfahren aus Basislacken und der erfindungsgemäßen Slurry hergestellt werden.

### Beispiele und Vergleichsversuche

### Herstellbeispiel 1 (Vergleich)

### Die Herstellung des Lösungspolyacrylatharzes A gemäß Herstellungsbeispiel 1, Ziff. 1.1, von DE 198 41 842 C 2

1291,5 Gewichtsteile Methylisobutylketon (MIBK) und 43,0 Gewichtsteile Mercaptoethanol wurden in einem Reaktionsgefäß vorgelegt und auf 100°C erwärmt. Zu der Vorlage wurden bei 100°C binnen 5 h über zwei getrennte Zulaufbehälter der Initiator, bestehend aus 143,5 Gewichtsteilen TBPEH (tert.-Butylperethylhexanoat) und 86,1 Gewichtsteilen MIBK, und die Monomerenmischung, bestehend aus 485,0 Gewichtsteilen tert.-Butylacrylat, 254,0 Gewichtsteilen n-Butylmethacrylat, 213,8 Gewichtsteilen Cyclohexylmethacrylat, 409,0 Gewichtsteilen Hydroxypropylmethacrylat und 73,2 Gewichtsteilen Acrylsäure, zudosiert. Anschließend wurde auf 110°C erwärmt, und im Vakuum wurden bei 500 mbar ein Teil der flüchtigen Komponenten der Reaktionsmischung während 5 h abgezogen. Danach ließ man auf 80°C erkalten und trug die Harzlösung aus.

Die Harzlösung wies die folgenden Kennzahlen auf

| | |
|---|---|
| Festkörper: | 70,2% (1h bei 130°C) |
| Viskosität: | 25,5 dPas (Platte-Kegel-Viskosimeter, bei 23°C; 70%-ige Lösung) |
| Säurezahl: | 43,4 mg KOH/g Festharz |
| OH-Zahl: | 110 mg KOH/g Festharz |

### Herstellbeispiel 2 (Vergleich)

### Die Herstellung des Lösungspolyacrylatharzes B gemäß Herstellungsbeispiel 1, Ziff. 1.2, von DE 198 41 842 C 2

1076,7 Gewichtsteile Methylisobutylketon (MIBK) und 35,9 Gewichtsteile Mercaptoethanol wurden in einem Reaktionsgefäß vorgelegt und auf 100°C erwärmt. Zu der Vorlage wurden bei 100°C binnen 5 h über zwei getrennte Zulaufbehälter der Initiator, bestehend aus 119,6 Gewichtsteilen TBPEH (tert.-Butylperethylhexanoat) und 71,8 Gewichtsteilen MIBK, und die Monomerenmischung, bestehend aus 404,2 Gewichtsteilen tert.-Butylacrylat, 211,7 Gewichtsteilen n-Butylmethacrylat, 239,2 Gewichtsteilen Cyclohexylmethacrylat und 340,9 Gewichtsteilen Hydroxypropylmethacrylat zudosiert. Anschließend wurde auf 115°C erwärmt, und im Vakuum wurden bei 500 mbar ein Teil der flüchtigen Anteile während 3 h abgezogen. Danach ließ man auf 80°C erkalten und trug die Harzlösung aus.

Die Harzlösung wies folgende Kennzahlen auf:

| | |
|---|---|
| Festkörper: | 71,3% (1h bei 130°C) |
| Viskosität: | 19,2 dPas (Platte-Kegel-Viskosimeter, bei 23°C; 70%-ige Lösung) |
| Säurezahl: | 5 mg KOH/g Festharz |
| OH-Zahl: | 110 mg KOH/g Festharz. |

### Herstellbeispiel 3

### Die Herstellung eines erfindungsgemäß verwendbaren Lösungspolyacrylatharzes C

412 Gewichtsteile Methylethylketon wurden in einem Reaktionsgefäß vorgelegt und auf 80°C erwärmt. Zu der Vorlage wurden unter Rühren bei 80°C während sechs Stunden über zwei getrennte Zulaufgefäße der Initiator, bestehend aus 49 Gewichtsteilen VAZO® 67 (Azobisisovaleronitril) und 49 Gewichtsteile Methylethylketon, und die Monomerenmischung, bestehend aus 137,2 Gewichtsteilen tert.-Butylacrylat, 73,5 Gewichtsteilen n-Butylmethacrylat, 98 Gewichtsteilen Cyclohexylmethacrylat, 171,5 Gewichtsteilen Hydroxyethylmethacrylat und 9,8 Gewichtsteile Acrylsäure, gleichmäßig zudosiert. Anschließend wurde das Reaktionsgemisch noch während 1,5 Stunden bei 80°C gehalten. Danach wurde im Vakuum ein Teil der flüchtigen Bestandteilen während fünf Stunden abgezogen, bis der Festkörpergehalt bei 70 Gew.-% lag. Die resultierende Harzlösung wurde auf 50°C abgekühlt und ausgetragen.

Die Harzlösung wies folgende Kennzahlen auf:

| | |
|---|---|
| Festkörper: | 69,2% (1h bei 130°C) |
| Viskosität: | 3,8 dPas (Platte-Kegel-Viskosimeter, bei 23°C; 55%-ige Lösung, mit Xylol verdünnt) |
| Säurezahl: | 9,8 mg KOH/g Festharz |
| OH-Zahl: | 150 mg KOH/g Festharz. |

### Herstellbeispiel 4

### Die Herstellung eines blockierten Polyisocyanats auf der Basis von Isophorondiisocyanat

837 Gewichtsteile Isophorondüsocyanat wurden in einem geeigneten Reaktionsgefäß vorgelegt und mit 0,1 Gewichtsteilen Dibutylzinndilaurat versetzt. Sodann ließ man eine Lösung aus 168 Gewichtsteilen Trimethylolpropan und 431 Gewichtsteilen Methylethylketon langsam zulaufen. Durch die exotherme Reaktion stieg die Temperatur an. Nachdem 80°C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 % (bezogen auf NCO-Gruppen) erreicht hatte. Anschließend wurde das Reaktionsgemisch auf 40°C gekühlt, und es wurde eine Lösung von 362 Gewichtsteilen 3,5-Dimethylpyrazol in 155 Gewichtsteilen Methylethylketon innerhalb 30 Minuten zugegeben. Nachdem das Reaktionsgemisch sich durch die Exothermie auf 80°C erwärmt hatte, hielt man die Temperatur für 30 Minuten konstant, bis der NCO-Gehalt auf kleiner 0,1% abgesunken war. Sodann fügte man 47 Gewichtsteile n-Butanol zu der Reaktionsmischung hinzu, hielt für weitere 30 Minuten bei 80°C und trug sie nach kurzer Kühlung aus.

Das Reaktionsprodukt wies einen Festgehalt von 69,3% (1h bei 130°C) auf.

### Herstellbeispiel 5

### Die Herstellung eines blockiertes Polyisocyanats auf der Basis von Hexamethylendiisocyanat

534 Gewichtsteile Desmodur® N 3300 (handelsübliches Isocyanurat von Hexamethylendüsocyanat der Firma Bayer AG) und 200 Gewichtsteile Methylethylketon wurden in einem Reaktionsgefäß vorgelegt und auf 40°C erhitzt. Zu der Lösung gab man unter Kühlung 100 Gewichtsteile 2,5-Dimethylpyrazol zu und wartete das Abklingen der exothermen Reaktion ab. Danach wurden bei fortgesetzter Kühlung erneut 100 Gewichtsteile 2,5-Dimethylpyrazol hinzugegeben. Nach erneutem Abklingen der exothermen Reaktion wurden weitere 66 Gewichtsteile 2,5-Dimethylpyrazol zugegeben. Danach wurde die Kühlung abgestellt, wodurch sich das Reaktionsgemisch langsam auf 80°C erwärmte. Man hielt es bei dieser Temperatur, bis sein Isocyanatgehalt auf unter 0,1% gesunken war. Danach wurde das Reaktionsgemisch gekühlt und ausgetragen.

Die resultierende Lösung des blockierten Polyisocyanats wies einen Festkörpergehalt von 81 Gew.-% (1h bei 130°C) und eine Viskosität von 3,4 dPas (70%-ig in Methylethylketon; Platte-Kegel-Viskosimeter bei 23°C) auf.

### Vergleichsversuche V1 und V2

### Die Herstellung der nicht erfindungsgemäßen Pulverklarlack-Slurries V1 und V2

### Vergleichsversuch V 1

### Die Herstellung der nicht erfindungsgemäßen Pulverklarlack-Slurry V1 auf der Basis des Lösungspolyacrylatharzes A gemäß dem Herstellbeispiel 1

812,1 Gewichtsteile der Acrylatharzlösung A gemäß dem Herstellbeispiels 1 und 492,5 Gewichtsteile der Lösung des blockierten Polyisocyanats gemäß Herstellbeispiel 4 wurden bei Raumtemperatur in einem offenen Rührgefäß 15 min lang unter Rühren vermischt. Man fügte sodann 16,2 Gewichtsteile Cyagard 1164 (UV-Absorber der Firma Cytec), 9,6 Gewichtsteile Tinuvin flüssig 123 (sterisch gehindertes Amin "HALS" der Firma Ciba Geigy), 15,2 Gewichtsteile N,N-Dimethylethanolamin und 7,0 Gewichtsteile Dibutylzinndilaurat (DBTL) hinzu und rührt für weitere 2 h bei Raumtemperatur. Sodann verdünnte man die Mischung mit 561,3 Gewichtsteilen vollentsalztem Wasser in kleinen Portionen. Nach einer Zwischenpause von 15 min. wurden weitere 676,0 Gewichtsteile VE-Wasser zugegeben. Es bildete sich eine niedrigviskose wässrige Emulsion mit einem theoretischen Festkörpergehalt von 37%, die bei Raumtemperatur für weitere 48 Stunden gerührt wurde. Die abgedunstete Flüssigkeitsmenge wurde durch Zugabe von VE-Wasser bis zum ursprünglichen Füllstand ergänzt. Man erhielt eine Pulverklarlack-Slurry mit folgenden Kennzahlen:

| | |
|---|---|
| Festkörper (2 h 80°C): | 35,6% |
| Gehalt an Carboxylgruppen: | 0,52 meq/g Festkörper |
| Gehalt an Neutralisationsmittel: | 0,22 meq/g Festkörper |
| Neutralisationsgrad: | 42% |
| Lösemittelgehalt: | < 0,05% (gaschromatographisch) |
| Partikelgröße: | 6 µm (D.50; |
| | Laserbeugungsmessgerätder Firma |
| | Malvern) |

In 1000 Gewichtsteile der Pulverklarlack-Slurry wurden zur Einstellung der gewünschten Strukturviskosität 8,7 Gewichtsteile Acrysol® RM 8 (nicht ionischer Assoziativ-Verdicker der Firma Rohm & Haas) und 6,0 Gewichtsteile Viskalex® (Verdicker der Firma Allied Colloids) eingrührt.

Die resultierende Pulverklarlack-Slurry 1 zeigte das nachfolgende Viskositätsprofil:
1405 mPas bei einer Scherrate von 10 s⁻¹
791 mPas bei einer Scherrate von 100 s⁻¹
308 mPas bei einer Scherrate von 1000 s⁻¹

Die Pulverklarlack-Slurry V1 hatte eine Mindestfilmbildetemperatur von 35°C.

### Vergleichsversuch V 2

### Die Herstellung der nicht erfindungsgemäßen Pulverklarlack-Slurry V 2 auf der Basis der Lösungspolyacrylatharze A und B gemäß den Herstellbeispielen 1 und 2

331,0 Gewichtsteile des Acrylatharzes A gemäß Herstellbeispiel 1, 774,5 Gewichtsteile des Acrylatharzes B gemäß Herstellbeispiel 2 und 715,8 Gewichtsteile der Lösung des blockierten Polyisocyanats gemäß Herstellbeispiel 4 wurden, wie in Beispiel 1 beschrieben, miteinander vermischt. Dann fügte man 4,8 Gewichtsteile Cyagard 1146, 7,6 Gewichtsteile Tinuvin 123, 10,0 Gewichtsteile N,N-Dimethylethanolamin und 5,5 Gewichtsteile DBTL zu. Nach 2 Stunden Rühren gab man 723,0 Gewichtsteile VE-Wasser in kleinen Portionen zu und verdünnte die resultierende Mischung 15 min später mit weiteren 910,0 Gewichtsteilen VE-Wasser. Die so erhaltene Pulverklarlackdispersion wurde in einen Reaktor überführt, und das Lösemittel wurde als Azeotrop mit dem mit übergehenden Wasser unter Vakuum bei 25 bis 35°C entfernt, wobei die Destillatmenge im Verlaufe der Destillation durch 2000 Gewichtsteile VE-Wasser in kleinen Portionen über einen Vakuumtropftrichter mit Dreiwegehahn ersetzt wurde. Man setzte die Destillation so lange fort, bis kein Restlösemittel mehr feststellbar war. Die so erhaltene Pulverklarlack-Slurry wies die folgenden Kennzahlen auf:

| | |
|---|---|
| Festkörper (2 h 80°C): | 44,3% |
| Gehalt an Carboxylgruppen: | 0,19 meq/g Festkörper |
| Gehalt an Neutralisationsmittel: | 0,10 meq/g Festkörper |
| Neutralisationsgrad: | 52% |
| Lösemittelgehalt: | < 0,05% (gaschromatographisch) |
| Partikelgröße: | 7 µm (D.50; Laserbeugungsmessgerät der |
| | Firma Malvern) |

In 1000 Gewichtsteile dieser Pulverklarlack-Slurry wurden zur Einstellung der gewünschten Strukturviskosität 7,8 Gewichtsteile Acrysol RM 8 und 4,7 Gewichtsteile Viskalex HV 30 eingerührt. Die erfindungsgemäße Pulverklarlack-Slurry 2 zeigte das nachfolgende Viskositätsprofil:
5243 mPas bei einer Scherrate von 10 s⁻¹
569 mPas bei einer Scherrate von 1000 s⁻¹.

Die Mindestfilmbildetemperatur lag bei 43°C.

### Vergleichsversuche V 3 und V 4

### Die Verwendung der nicht erfindungsgemäßen Pulverldarlack-Slurries V 1 (Vergleichsversuch V 1) und V 2 (Vergleichsversuch V 2) zur Herstellung der nicht erfindungsgemäßen Klarlackierungen V 3 und V 4

Zur Applikation der Pulverklarlack-Slurries V 1 und V 2 wurde ein sogenannter integrierter Aufbau vorbereitet, der nachfolgend für den Metallicfarbton "Meteor-grau" beschrieben wird:

Auf mit handelsüblichem Elektrotauchlack kathodisch beschichteten Stahltafeln wurde mit einer Becherpistole zunächst eine Funktionsschicht (Ecoprime® Meteorgrau; BASF Coatings AG) appliziert. Nach 5-minütigem Ablüften bei Raumtemperatur wurde auf diese Schicht in gleicher Weise ein meteorgrauer Wassermetallic-Basislack (Ecostar® Meteorgrau; BASF Coatings AG) appliziert und anschließend für 5 min bei 80°C vorgetrocknet.

Nach Abkühlen der Tafeln wurden in gleicher Weise die erfindungsgemäßen Pulverklarlack-Slurries V 1 (Vergleichsversuch V 3) und V 2 (Vergleichsversuch V 4) appliziert. Hiernach ließ man die Tafeln zunächst 5 min ablüften und anschließend 15 min lang bei 40°C vortrocknen. Dann wurden sie für 30 min bei 145°C eingebrannt.

Es resultierte bei Vergleichsversuch V 3 eine Wassermetallic-Gesamtlackierung in dem Farbton "Meteorgrau". Die applizierten Naßschichten waren so gewählt, daß nach dem Einbrennen die Trockenschichtdicken für die Funktionsschicht und den Wassermetallic-Basislack jeweils bei 15 µm lagen. Die Klarlackierung V 3 hatte eine Schichtdicke von 40 bis 45 µm.

Die in gleicher Weise hergestellte zweite Tafel mit der Pulverklarlack-Slurry V 2 (Vergleichsversuche V 4) wies für die Funktionsschicht und den Wassermetallic-Basislack wiederum eine Schichtdicke von jeweils 15 µm auf. Die Klarlackierung 3 hatte eine Schichtdicke von 44 bis 48 µm.

Die anwendungstechnischen Eigenschaften der nicht erfindungsgemäßen Klarlackierungen V 3 und V 4 werden in der Tabelle den anwendungstechnischen Eigenschaften der nicht erfindungsgemäßen Klarlackierung V 6 und der erfindungsgemäßen Klarlackierung gegenübergestellt.

### Vergleichsversuch V 5

### Die Herstellung der nicht erfindungsgemäßen Pulverklarlack-Slurry V 5

855,2 Gewichtsteile der Acrylatharzeslösung des Herstellbeispiel 3, 205,1 Gewichtsteile der Lösung des blockierten Polyisocyanats des Herstellbeispiels 4 und 415,1 Gewichtsteile der Lösung des blockierten Polyisocyanats des Herstellbeispiels 5 wurden bei Raumtemperatur in einem offenen Rührgefäß während 15 Minuten miteinander vermischt. Zu der resultierenden Mischung wurden 42,9 Gewichtsteile Cyagard® 1664L (handelsüblicher UV-Absorber der Firma Cytec), 10,7 Gewichtsteile Tinuvin®123 (sterisch gehindertes Amin, HALS der Firma Ciba), 5,3 Gewichtsteile Benzoin, 7,835 Gewichtsteile N,N-Dimethylethanolamin und 0,857 Gewichtsteile Dibutylzinndilaurat hinzugegeben. Die resultierende Mischung wurde für weitere zwei Stunden bei Raumtemperatur gerührt. Anschließend wurde sie mit 676,9 Gewichtsteilen deionisiertem Wasser in kleinen Portionen versetzt. Nach einer Pause von 15 Minuten wurden weitere 780 Gewichtsteile deionisiertes Wasser innerhalb von 30 Minuten gleichmäßig hinzugegeben. Es bildete sich eine niedrigviskose wäßrige Emulsion mit einem theoretischen Festkörpergehalt von 37 Gew.-%.

Die wäßrige Emulsion wurde mit weiteren 425,2 Gewichtsteilen deionisiertem Wasser verdünnt. Hiernach wurde ihr an einem Rotationsverdampfer unter Vakuum die gleiche Menge eines Gemisch aus flüchtigen organischen Lösemitteln und Wasser entzogen, ist der Festkörpergehalt wieder bei 37 Gew.-% lag (1h bei 130°C).

Die so erhaltene Pulverklarlack-Slurry wies die folgenden Kennzahlen auf:

| | |
|---|---|
| Festkörper (1 h bei 130°C): | 36,9% |
| Gehalt an Carboxylgruppen: | 0,096 meq/g Festkörper |
| Gehalt an Neutralisationsmittel: | 0,079 meq/g Festkörper |
| Neutralisationsgrad: | 85% |
| Lösemittelgehalt: | < 0,05% (gaschromatographisch) |
| Partikelgröße: | 0,9 µm (D.50; Laserbeugungsmessgerät der |
| | Firma Malvern) |

Zur Einstellung der gewünschten Strukturviskosität wurden in die Pulverklarlack-Slurry 79 Gewichtsteile Acrysol RM 8 und 22,7 Gewichtsteile Viskalex HV 30 eingerührt.

### Vergleichsversuche V 6

### Die Herstellung einer nicht erfindungsgemäßen Klarlackierung V 6

Der Vergleichsversuche V 3 wurde wiederholt, nur daß anstelle der Pulverklarlack-Slurry V 1 die Pulverklarlack-Slurry V 5 des Vergleichsversuchs V 5 verwendet wurde und daß die Schichtdicke der Klarlackierung bei 39 bis 44 µm lag.

Die anwendungstechnischen Eigenschaften der nicht erfindungsgemäßen Klarlackierung V 6 werden in der Tabelle den anwendungstechnischen Eigenschaften der nicht erfindungsgemäßen Klarlackierungen V 3 und V 4 und der erfindungsgemäße Klarlackierung des Beispiels 2 gegenübergestellt.

### Beispiel 1

### Die Herstellung einer erfindungsgemäßen Pulverklarlack-Slurry

Der Vergleichsversuch V 5 wurde wiederholt, nur daß anstelle von 7,835 Gewichtsteilen N.N-Dimethylethanolamin 4,148 Gewichtsteile verwendet wurden und daß die Schichdicke der Klarlackierung bei 45 bis 49 µm lag.

Die erfindungsgemäße Pulverklarlack-Slurry wies vor der Einstellung der Viskosität die folgenden Kennzahlen auf:

| | |
|---|---|
| Festkörper (1 h bei 130°C): | 36,7% |
| Gehalt an Carboxylgruppen: | 0,096 meq/g Festkörper |
| Gehalt an Neutralisationsmittel: | 0,045 meq/g Festkörper |
| Neutralisationsgrad: | 45% |
| Lösemittelgehalt: | < 0,05% (gaschromatographisch) |
| Partikelgröße: | 4,8 µm (D.50; Laserbeugungsmessgerät der |
| | Firma Malvern). |

### Beispiel 2

### Die Herstellung einer erfindungsgemäßen Klarlackierung

Der Vergleichsversuche V 6 wurde wiederholt, nur daß anstelle der nicht erfindungsgemäßen Pulverklarlack-Slurry V 5 die erfindungsgemäße Pulverklarlack-Slurry des Beispiels 1 verwendet wurde.

Die anwendungstechnischen Eigenschaften der erfindungsgemäßen Klarlackierung des Beispiels 2 werden in der Tabelle den anwendungstechnischen Eigenschaften der nicht erfindungsgemäßen Klarlackierungen V 3, V 4 und V 6 gegenübergestellt.

**Tabelle:**

| **Die anwendungstechnischen Eigenschaften der erfindungsgemäßen Klarlackierung (Beispiel 2) und der nicht erfindungsgemäßen Klarlackierungen V 3, V 4² und V 6** | | | | |
|---|---|---|---|---|
| **Eigenschaft** | **Vergleichsversuche:** | | | **Beispiel 2** |
| | **V 3** | **V 4** | **V 6** | |
| Schichtdicke (µm) | 40-45 | 40-48 | 39-44 | 45-49 |
| Glanz bei 20°^{*)} | 77 | 77 | 81 | 84 |
| Haze^{**)} | 80 | 84 | 41 | 24 |
| Aussehen | brillant | glänzend | Blasen Risse | brillant störungsfrei |
| Verlauf | sehr gut | gut | gut | sehr gut |

| Chemikalienbeständigkeit: ^{**)} | | | | |
|---|---|---|---|---|
| Schwefelsäure 1%-ig | 56 | 46 | 40 | 42 |
| Pankreatin | 54 | >58 | 42 | 43 |
| Baumharz | 44 | 41 | 43 | 47 |
| Wasser | 54 | 49 | 55 | >62 |
| Kochergrenze (µm)^{***)} | 45 | 48 | 45 | 65 |

| | | | | |
|---|---|---|---|---|
| ^{*)} Meßgerät, Hersteller Fa. Byk; ^{**)} Messung mittels Gradientenofen, Hersteller Fa. Byk. Der Zahlenwert gibt die untere Temperatur in °C an, ab der auf der Lackierung aufgetragene Tropfen der entsprechenden Substanz sichbare Spuren hinterlassen; ^{***)} Bestimmt durch Keilauftrag. | | | | |

Der Vergleich der Ergebnisse in der Tabelle zeigt, daß die erfindungsgemäße Klarlackierung bei besserem Glanz und Haze eine signifikant höhere Kochergrenze und eine signifikant höhere Beständigkeit gegenüber Feuchtigkeit aufweist.
Während bei den nicht erfindungsgemäßen Klarlackierungen V 3, V 4 und V 6 ein Weißanlaufen zu beobachten war, trat dies bei der erfindungsgemäße Klarlackierung nicht mehr auf.

## Patentansprüche

1. Strukturviskose, von organischen Lösemitteln und externen Emulgatoren freie Pulverklarlack-Slurry, enthaltend feste und/oder hochviskose, unter Lagerungs- und Anwendungsbedingungen dimensionsstabile Partikel, wobei
1. die Partikel
1.1 eine mittleren Teilchengröße von 1,0 bis 20 µm aufweisen, wobei mindestens 99% der Partikel eine Teilchengröße <30 µm haben, und
1.2 mindestens ein Polyol einer OH-Zahl von 120 bis 180 mg KOH/g, enthaltend potentiell ionische Gruppen, als Bindemittel enthalten,
und wobei
**2. die Pulverklarlack-Slurry**
2.1 einen Gehalt an potentiell ionischen Gruppen von 0,01 bis 1 meq/g Festkörper,
2.2 bei einem Neutralisationsgrad von höchstens 50% einen Gehalt an durch Neutralisation der potentiell ionischen Gruppen erzeugten ionischen Gruppen von 0,005 bis 0,1 meq/g Festkörper und
2.3 eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹
aufweist.

2. Pulverklarlack-Slurry nach Anspruch 1, **dadurch gekennzeichnet, daß** als Polyol ein (Meth)Acrylatcopolymerisat verwendet wird.

3. Pulverklarlack-Slurry nach einem der Ansprüche 1 oder 2, **dadurch gekennzeichnet, daß** sie einen Festkörpergehalt von 10 bis 60 Gew.-%, insbesondere 20 bis 50 Gew.-%, hat.

4. Pulverklarlack-Slurry nach einem der Ansprüche 1 bis 3, **dadurch gekennzeichnet, daß** die mittlere Teilchengröße der Partikel > 3 µm ist.

5. Pulverklarlack-Slurry nach einem der Ansprüche 1 bis 4, **dadurch gekennzeichnet, daß** sie ionische Verdicker und nichtionische Assoziativ-Verdicker enthält.

6. Die Pulverklarlack-Sluny nach einem der Ansprüche 1 bis 5, **dadurch gekennzeichnet, daß** die Partikel blockierte Polyisocyanate und/oder Tris(alkoxicarbonylamino)triazine als Vernetzungsmittel enthalten.

7. Die Pulverklarlack-Sluny nach einem der Ansprüche 1 bis 6 **dadurch gekennzeichnet, daß** sie eine Mindestfilmbildetemperatur von mehr als 20°C, insbesondere mehr als 30°C, aufweist.

8. Verwendung der Pulverklarlack-Slurry gemäß einem der Ansprüche 1 bis 7, für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile.

9. Verwendung nach Anspruch 8, **dadurch gekennzeichnet, daß** die Pulverklarlack-Slurry zur Herstellung von Klarlackierungen im Rahmen von farb- und/oder effektgebenden Mehrschichtlackierungen verwendet wird.

## Claims

1. Pseudoplastic powder clearcoat slurry free from organic solvents and external emulsifiers and comprising particles which are solid and/or of high viscosity and are dimensionally stable under storage and application conditions, where
1. the particles
1.1 have an average size of from 1.0 to 20 µm, at least 99% of the particles having a size ≤ 30 µm, and
1.2 comprise as binder at least one polyol with an OH number of from 120 to 180 mg KOH/g, containing potentially ionic groups,
and where
2. the powder clearcoat slurry
2.1 has a potentially ionic group content of from 0.01 to 1 meq/g of solids,
2.2 at a degree of neutralization of not more than 50% contains from 0.005 to 0.1 meq/g of solids of ionic groups produced by neutralization of the potentially ionic groups, and
2.3 has a viscosity of (i) from 50 to 1 000 mPas at a shear rate of 1 000 s⁻¹, (ii) from 150 to 8 000 mPas at a shear rate of 10 s⁻¹, and (iii) from 180 to 12 000 mPas at a shear rate of 1 s⁻¹.

2. Slurry according to Claim 1 or 2, **characterized in that** the polyol used comprises a (meth)acrylate copolymer.

3. Slurry according to any of Claims 1 or 2, **characterized in that** it has a solids content of from 10 to 60% by weight, in particular from 20 to 50% by weight.

4. Slurry according to any of Claims 1 to 3, **characterized in that** the average size of the particles is > 3 µm.

5. Slurry according to any of Claims 1 to 4, **characterized in that** it comprises ionic thickeners and nonionic associative thickeners.

6. Slurry according to any of Claims 1 to 5, **characterized in that** the particles comprise blocked polyisocyanates and/or tris(alkoxycarbonylamino)triazines as crosslinking agents.

7. The slurry according to any of Claims 1 to 6, **characterized in that** it has a minimum film-forming temperature of more than 20°C, in particular more than 30°C.

8. Use of a slurry according to any of Claims 1 to 7 for automotive OEM finishing, automotive refinishing, the interior and exterior coating of constructions, the coating of doors, windows and furniture, and for industrial coating, including coil coating, container coating and the impregnation and/or coating of electrical components.

9. The use according to Claim 8, **characterized in that** the powder clearcoat slurry is used to produce clearcoats as part of multicoat color and/or effect coating systems.

## Revendications

1. Suspension de vernis transparent en poudre, à viscosité de structure solide ou élevée, exempte de solvants organiques et d'émulsionnants externes contenant des particules à dimension stable en conditions de stockage et d'application pour laquelle
1. les particules
1.1 ont une taille moyenne comprise entre 0,1 et 20 µm et où au moins 99 % des particules ont une taille inférieure ou égale à 30 µm, et
1.2 contiennent au moins un polyol d'un nombre OH de 120 à 180 mg KOH/g, contenant des groupes potentiellement ioniques pour liants,
et où
2. la suspension de vernis transparent en poudre présente
2.1 une teneur en groupes potentiellement ioniques de 0,01 à 1 meq/g de solides,
2.2 une teneur en groupes ioniques de 0,005 à 0,1 meq/g de solides générés par neutralisation des groupes potentiellement ioniques pour un degré de neutralisation de 50 % et
2.3 une viscosité de (i) 50 à 1000 mPas pour un taux de cisaillement de 1000 s-1, (ii) 150 à 8000 mPas pour un taux de cisaillement de 10 s-1 et (iii) 180 à 12 000 mPas pour un taux de cisaillement de 1 s-1.

2. Suspension de vernis transparent en poudre conforme à la revendication 1, **caractérisée par le fait qu'**un copolymère (méth)acrylate est utilisé comme polyol.

3. Suspension de vernis transparent en poudre conforme à une des revendications 1 ou 2, **caractérisée par le fait qu'**elle a une teneur en solides de 10 à 60 % en poids, plus particulièrement de 20 à 50 % en poids.

4. Suspension de vernis transparent en poudre conforme à une des revendications 1 à 3, **caractérisée par le fait que** la taille des particules est supérieure à 3 µm.

5. Suspension de vernis transparent en poudre conforme à une des revendications 1 à 4, **caractérisée par le fait qu'**elle contient des épaississants ioniques et des épaississants associatifs non ioniques.

6. Suspension de vernis transparent en poudre conforme à une des revendications 1 à 5, **caractérisée par le fait que** les particules contiennent des polyisocyanates bloqués et/ou des tris(alcoxycarbonylamino) triazines comme réticulants.

7. Suspension de vernis transparent en poudre conforme à une des revendications 1 à 6, **caractérisée par le fait qu'**elle a une température minimale de formation du film supérieure à 20°C, plus particulièrement à 30°C.

8. Utilisation de la suspension de vernis transparent en poudre conforme à une des revendications 1 à 7, pour le premier laquage des automobiles, le laquage de réparation des automobiles, le laquage des constructions intérieures et extérieures, le laquage des portes, des fenêtres et des meubles ainsi que la laque industrielle, y compris le prélaquage en continu, le revêtement de conteneurs et l'imprégnation et/ou le revêtement d'éléments électrotechniques.

9. Utilisation conforme à la revendication 8, **caractérisée par le fait que** la suspension de vernis transparent en poudre est utilisée pour la fabrication de vernis transparents dans le cadre de laquages en plusieurs couches de couleur et/ou à effet.
